# FASCICULE DE BREVET EUROPEEN

(11) **EP 4 226 048 B1**
(45) Date de publication et mention de la délivrance du brevet: **04.09.2024**
(21) Numéro de dépôt: 21799085.2
(22) Date de dépôt: 05.10.2021
(51) Int. Cl.: F04D 29/02, F01D 5/28, F04D 29/32, F01D 5/14

(54) **AUBE EN MATERIAU COMPOSITE COMPRENANT UN BOUCLIER DE BORD D'ATTAQUE, TURBOMACHINE COMPRENANT L'AUBE**
SCHAUFEL AUS VERBUNDMATERIAL MIT EINEM VORDERKANTENSCHILD, TURBINENMOTOR MIT DER SCHAUFEL
BLADE MADE OF COMPOSITE MATERIAL COMPRISING A LEADING EDGE SHIELD, TURBINE ENGINE COMPRISING THE BLADE

(30) Priorité: 12.10.2020 FR 2010395
(43) Date de publication de la demande: 16.08.2023
(73) Titulaire: SAFRAN AIRCRAFT ENGINES, 75015 Paris (FR)
(72) Inventeur: SULLET, Charles-Henri, Claude, Jacky, 77550 MOISSY-CRAMAYEL (FR); GONDRE, Guillaume, Pascal, Jean-Charles, 77550 MOISSY-CRAMAYEL (FR)
(74) Mandataire: Cabinet Beau de Loménie
(86) Numéro de dépôt international: PCT/FR2021/051726
(87) Numéro de publication internationale: WO 2022/079370

(56) Documents cités:
- FR-A1- 2 906 320
- FR-A1- 3 045 712
- FR-A1- 3 045 713
- GB-A- 1 500 776

## Description

### Domaine technique

Le présent exposé concerne un bouclier de bord d'attaque pour aube de turbomachine, en particulier un bouclier de bord d'attaque d'une aube en matériau composite.

### Technique antérieure

De tels boucliers de bord d'attaque sont typiquement destinés à protéger les bords d'attaque d'aubes tournantes ou d'aubes directrices contre les impacts et l'érosion. On entend par « aubes », dans ce contexte, tant les aubes de soufflante que les pales d'hélice aérienne. Afin de limiter leur poids, ces aubes sont typiquement en composite à matrice organique, par exemple en polymère renforcée par des fibres. Bien que ces matériaux présentent des qualités mécaniques généralement très favorables, en particulier par rapport à leur masse, ils présentent une certaine sensibilité aux impacts ponctuels. Des boucliers, typiquement en matériau métallique hautement résistant, comme les alliages de titane, sont donc normalement installés sur les bords d'attaque de telles aubes, afin de les protéger contre ces impacts. Ces impacts peuvent être la conséquence de l'ingestion de petits oiseaux dans le moteur, par exemple. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent sur ces sections de, respectivement, l'intrados et l'extrados de l'aube, et servent principalement à assurer le positionnement et la fixation du bouclier sur le bord d'attaque.

On connaît de FR2906320 un bouclier de bord d'attaque permettant de réduire l'endommagement de l'aube en matériau composite lors d'impact d'un corps étranger.

Afin d'améliorer les performances aérodynamiques des aubes, leurs bords d'attaque présentent des formes de plus en plus complexes, ce qui complique la fabrication des boucliers devant épouser ces formes ainsi que la solidarisation du bouclier sur l'aube.

Par ailleurs, lors d'impacts sur une aube, par exemple l'ingestion d'un oiseau, le bouclier peut se désolidariser au moins partiellement du bord d'attaque de l'aube en composite et engendrer une altération des performances aérodynamiques liée à la dégradation de l'aérodynamisme de l'aube pouvant être significative.

En outre, si une portion du bouclier est arrachée, le bord d'attaque de l'aube n'est plus protégé sur toute sa hauteur, le composite au bord d'attaque de l'aube mis à nu est soumis aux agressions de l'environnement extérieur. Le profil qui en résulte est généralement irrégulier ce qui entraîne également une perte d'aérodynamisme.

En plus du décollement partiel du bouclier en tête d'aube, un endommagement de l'aube, également appelé « effet charnière », peut être observé. Cet endommagement est notamment dû aux efforts exercés par les ailettes sur l'aube lors de mouvements de rotation du bouclier par rapport à l'aube.

Suite à ces endommagements, il faut généralement réparer l'aube et/ou la remplacer.

### Exposé de l'invention

Le présent exposé vise à remédier au moins en partie à ces inconvénients.

A cet effet, le présent exposé concerne une aube comprenant un corps d'aube en matériau composite à matrice organique renforcée par des fibres et un bouclier de bord d'attaque en un matériau ayant une meilleure résistance aux impacts ponctuels que le matériau composite du corps d'aube, le bouclier de bord d'attaque étant assemblé sur le corps d'aube et comportant une ailette intrados et une ailette extrados reliées par une partie centrale plus épaisse, l'aube comportant une hauteur de veine aérodynamique et une longueur de corde, l'ailette extrados présentant :
- une première longueur projetée sur la corde comprise entre 10 et 18% de la longueur de corde, la première longueur étant disposée entre 70 et 80% de la hauteur de veine aérodynamique,
- une deuxième longueur projetée sur la corde comprise entre 18 et 26% de la longueur de corde, la deuxième longueur étant disposée entre 85 et 95% de la hauteur de veine aérodynamique, et
- une troisième longueur projetée sur la corde comprise entre la première longueur et la deuxième longueur, la troisième longueur étant disposée à 100% de la hauteur de veine aérodynamique

Grâce à cette géométrie du bouclier de bord d'attaque, il est possible de réduire le décollement de l'ailette extrados lors d'impacts ponctuels, tels que l'ingestion de petits oiseaux dans le moteur. En particulier, la première longueur permet de réduire l'étendue du décollement de l'ailette extrados en tête d'aube, la deuxième longueur permettant à l'ailette de jouer son effet protecteur dans une zone généralement fortement sollicitée lors d'ingestion d'oiseaux, le corps d'aube étant relativement épais dans cette zone. La troisième longueur est un compromis entre la première longueur et la deuxième longueur. Ainsi, même lors d'un décollement partiel de l'ailette extrados, la dégradation de l'aérodynamisme de l'aube 16 est réduite par rapport à une aube de l'état de la technique. Il est également possible, en permettant d'optimiser les dégradations de décollement, de réduire les risques de dégradation de carter lors d'

Dans certains modes de réalisation, la première longueur peut être égale à 14% de la longueur de corde.

Dans certains modes de réalisation, la deuxième longueur peut être égale à 22% de la longueur de corde.

Dans certains modes de réalisation, la première longueur peut être disposée à 75% de la hauteur de veine aérodynamique.

Dans certains modes de réalisation, la deuxième longueur peut être disposée à 90% de la hauteur de veine aérodynamique.

Dans certains modes de réalisation, le corps d'aube peut comprendre une direction de chaîne et une direction de trame et l'ailette extrados peut comprendre un bord libre, un premier point disposé sur le bord libre à la même hauteur que la première longueur et un deuxième point disposé sur le bord libre à une hauteur supérieure ou égale à 5% de la hauteur de veine aérodynamique par rapport à la hauteur de la première longueur et inférieure ou égale à 85% de la hauteur de veine aérodynamique définissent un premier vecteur, le premier vecteur et la direction de chaine au premier point définissant un premier angle, le premier angle étant supérieur ou égal à 15°.

Lorsque le premier angle est supérieur ou égal à 15°, le bord libre du bouclier croise plusieurs torons de chaîne du corps d'aube, cette pluralité de torons étant sollicitée lors d'impacts sur l'aube.

Dans certains modes de réalisation, le corps d'aube peut comprendre une direction de chaîne et une direction de trame et l'ailette extrados peut comprendre un bord libre, un troisième point disposé sur le bord libre à 100% de la hauteur de veine aérodynamique et un quatrième point disposé sur le bord libre à une hauteur supérieure à la hauteur de la deuxième longueur et inférieure ou égale à 95% de la hauteur de veine aérodynamique définissent un deuxième vecteur, le deuxième vecteur et la direction de chaîne au troisième point définissant un deuxième angle, le deuxième angle étant supérieur ou égal à 15°.

Lorsque le deuxième angle est supérieur ou égal à 15°, le bord libre du bouclier croise plusieurs torons de chaîne du corps d'aube, cette pluralité de torons étant sollicitée lors d'impacts sur l'aube.

Dans certains modes de réalisation, le corps d'aube peut comprendre une direction de chaîne et une direction de trame et l'ailette extrados peut comprendre un bord libre, un premier point disposé sur le bord libre à la même hauteur que la première longueur et un deuxième point disposé sur le bord libre à une hauteur supérieure ou égale à 5% de la hauteur de veine aérodynamique par rapport à la hauteur de la première longueur et inférieure ou égale à 85% de la hauteur de veine aérodynamique définissent un premier vecteur, le premier vecteur et la direction de chaine au premier point définissant un premier angle, le premier angle étant supérieur ou égal à 15° et un troisième point disposé sur le bord libre à 100% de la hauteur de veine aérodynamique et un quatrième point disposé sur le bord libre à une hauteur supérieure à la hauteur de la deuxième longueur et inférieure ou égale à 95% de la hauteur de veine aérodynamique un deuxième vecteur, le deuxième vecteur et la direction de chaîne au troisième point définissant un deuxième angle, le deuxième angle étant supérieur ou égal à 15°.

Le présent exposé concerne également une turbomachine comprenant une aube telle que définie précédemment.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue schématique en perspective d'un turboréacteur à double flux.
[Fig. 2] La figure 2 est une vue schématique partielle en perspective d'une aube tournante de la soufflante du turboréacteur de la figure 1 montrant les torons de trame et les torons de chaîne selon un mode de réalisation de l'aube.
[Fig. 3] La figure 3 est une vue schématique en perspective d'une aube tournante de la soufflante du turboréacteur de la figure 1 selon un mode de réalisation de l'aube.
[Fig. 4] La figure 4 est une vue schématique partielle en perspective d'une aube de l'état de la technique.
[Fig. 5] La figure 5 est un graphique représentant la longueur du bord d'attaque du bouclier de la figure 4.
[Fig. 6] La figure 6 est une vue schématique partielle en perspective de l'aube de la figure 3.
[Fig. 7] La figure 7 est un graphique représentant la longueur du bord d'attaque du bouclier de la figure 6.

Sur l'ensemble des figures, les éléments en commun sont repérés par des références numériques identiques.

### Description détaillée

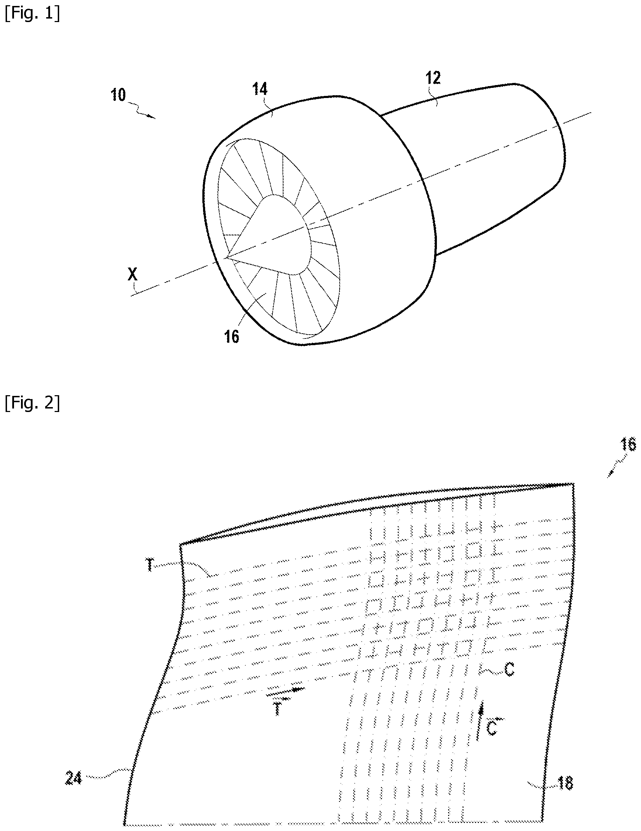

La figure 1 illustre un turboréacteur à double flux 10, qui est un exemple non-limitatif de turbomachine, comprenant un groupe générateur de gaz 12 et une soufflante 14. Cette soufflante 14 comprend une pluralité d'aubes tournantes 16, arrangées radialement autour d'un axe central X, et profilées aérodynamiquement de manière à impulser l'air par leur rotation.

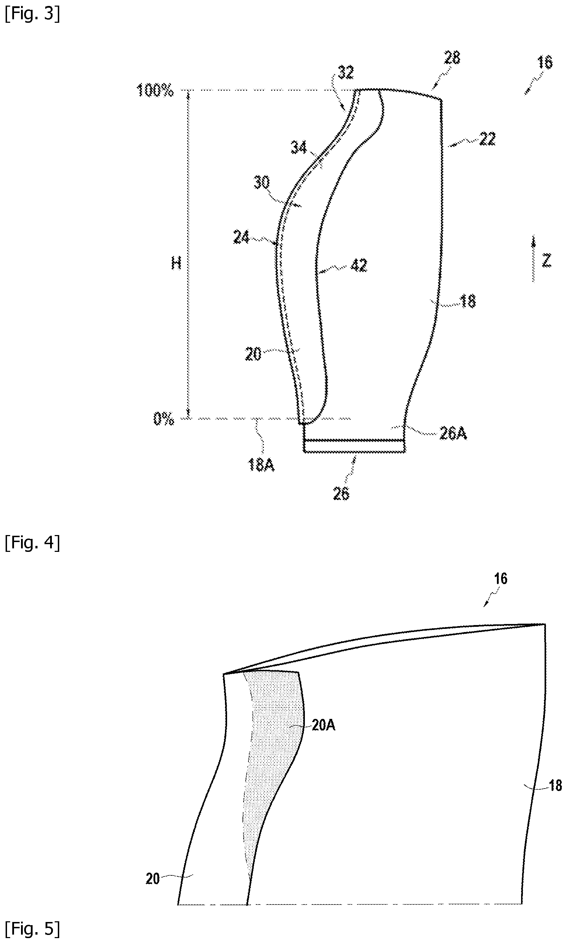

Ainsi, comme illustré sur la figure 3, chaque aube 16 comprend un corps d'aube 18 qui présente un bord d'attaque 24 (en pointillé sur la figure 3), un bord de fuite 22, un pied d'aube 26 et une tête d'aube 28. Entre le pied d'aube 26 l'extrémité de la tête d'aube 28, l'aube 16 comprend classiquement une pale qui est profilée aérodynamiquement de manière à impulser l'air auquel elle est au contact direct dans la veine. La « hauteur » sur l'aube, et en particulier sur sa pale sera considérée suivant l'axe d'empilement Z que suit en particulier le bord d'attaque 24.

En fonctionnement normal, le vent relatif est sensiblement orienté vers le bord d'attaque 24 de chaque aube 16. Ainsi, ce bord d'attaque24 est particulièrement exposé aux impacts. En particulier quand le corps d'aube 18 est en matériau composite, notamment à matrice polymère renforcée par des fibres, il convient de protéger le bord d'attaque 24 avec un bouclier 20 de bord d'attaque intégré à chaque aube.

Dans le mode de réalisation de la figure 3, le bouclier 20 présente une ailette intrados 32, une ailette extrados 30 et une section centrale plus épaisse 34 destinée à chevaucher le bord d'attaque 24 du corps d'aube 18 et reliant l'ailette intrados 32 et l'ailette extrados 30. Les ailettes intrados et extrados 32, 30 assurent le positionnement du bouclier 20 sur le corps d'aube 18. La section centrale 34 plus épaisse est également appelée le nez du bouclier 20 de bord d'attaque.

Le bouclier 20 comporte également une extrémité radialement interne disposée du côté du pied d'aube 26 et une extrémité radialement externe disposée en tête d'aube 28.

A l'opposé du nez 34, les ailettes intrados et extrados 32, 30 comportent chacune un bord libre 42.

Le bouclier 20 de bord d'attaque est en un matériau ayant une raideur supérieure à celle du matériau composite du corps d'aube. Le bouclier 20 de bord d'attaque est dans un matériau ayant une meilleure résistance aux impacts ponctuels que le matériau composite du corps d'aube. Le bouclier 20 de bord d'attaque est principalement métallique, et plus spécifiquement en alliage à base de titane, comme par exemple le TA6V (Ti-6Al-4V). Le bouclier 20 de bord d'attaque pourrait également être en acier ou en alliage à base de fer, de chrome et de nickel communément désigné par la marque déposée Inconel^{™}. On parle par la suite d'Inconel pour désigner un tel alliage à base de fer de chrome et de nickel.

La figure 3 présente également la hauteur H de veine aérodynamique de l'aube 16. Le 0% étant disposé du côté du pied d'aube 26 et le 100% étant disposé en tête d'aube 28. La pale est de manière classique reliée au pied d'aube 26 par une échasse 26A.

La figure 2 présente la direction T des torons de trame et la direction C des torons de chaîne du corps d'aube 16. Le vecteur *̅T̅*̅ et le vecteur *̅C̅*̅ représentant respectivement le sens de trame et le sens de chaîne.

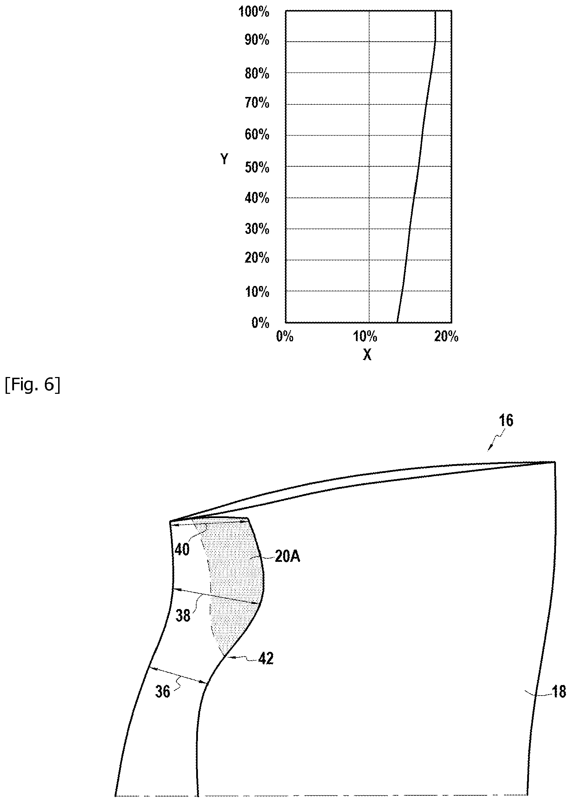

Les figures 4 et 5 présentent une aube de l'état de la technique. Comme représenté sur la figure 4, lors d'impacts sur l'aube 16, une portion 20A du bouclier 20 peut se décoller du corps d'aube 18. Cette portion 20A peut entraîner une dégradation de l'aérodynamisme de l'aube 16 pouvant éventuellement avoisiner 25% de perte de poussée. Comme représenté sur la figure 5, la longueur de l'ailette extrados est représentée en axe des X et la hauteur de veine aérodynamique est représentée en axe des Y. La figure 5 représente donc l'évolution de la longueur de l'ailette extrados le long de la veine aérodynamique. La hauteur H de la veine aérodynamique est exprimée en % et la longueur de l'ailette est exprimée en % de la corde à une hauteur de la veine aérodynamique donnée. Ainsi, la pale présente une hauteur H de veine suivant l'axe d'empilement Z entre sa limite inférieure, à l'intersection avec léchasse 26A et son l'extrémité de la tête d'aube 28. La hauteur prédéterminée H de hauteur de veine aérodynamique est considérée en se référant à une limite inférieure 18A de la pale qui est aussi la limite supérieure de l'échasse 26A.

La corde est une ligne imaginaire allant du bord d'attaque 24 au bord de fuite 22 de l'aube 16. La longueur de l'ailette est mesurée par projection de l'ailette sur la corde.

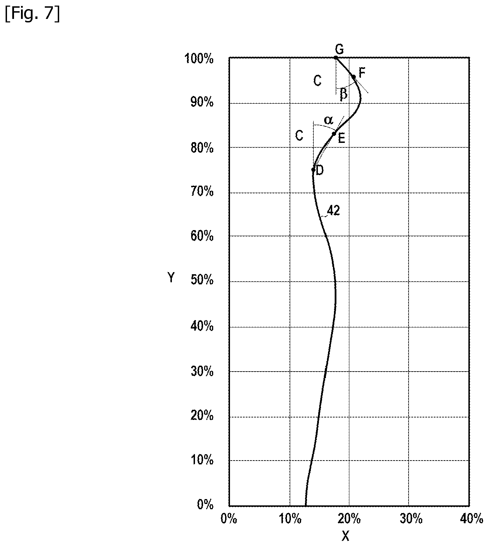

Les figures 6 et 7 sont des figures similaires aux figures 4 et 5.

La figure 6 représente un mode de réalisation de l'aube 16 et la figure 7 représente l'évolution de la longueur de l'ailette extrados 30 le long de la veine aérodynamique. La hauteur de la veine aérodynamique est exprimée en % et la longueur de l'ailette est exprimée en % de la corde à une hauteur de la veine aérodynamique donnée.

A titre d'exemple non limitatif, la première longueur est égale à 14% de la longueur de corde et est disposée à 75% de la hauteur de veine aérodynamique, la deuxième longueur est égale à 22% de la longueur de corde et est disposée à 90% de la hauteur de veine aérodynamique et la troisième longueur est égale à 18% de la longueur de corde.

Dans l'exemple de la figure 7, le premier point D est sur le bord libre 42 du bouclier 20, à 75% de la hauteur de veine aérodynamique.

Aussi, le deuxième point E est disposé sur le bord libre 42 et peut être disposé entre 80% et 85% de la hauteur de veine aérodynamique, 80% de la hauteur de veine aérodynamique étant égale à la hauteur de la première longueur 36 additionnée de 5% de la hauteur de veine aérodynamique.

A titre d'exemple non limitatif, le deuxième point E est disposé à 81% de la hauteur de veine aérodynamique.

Le premier point D et le deuxième point E définissent le premier vecteur.

La direction de chaine C et le premier vecteur forment un premier angle α qui est supérieur ou égal à 15°.

Le troisième point G est disposé sur le bord libre 42 et à 100% de la la hauteur de veine aérodynamique.

A titre d'exemple non limitatif, la deuxième longueur 38 étant à 90% de la hauteur de veine aérodynamique, le quatrième point F est disposé sur le bord libre 42 et peut être disposé entre 90% et 95% de la hauteur de veine aérodynamique.

A titre d'exemple non limitatif, le quatrième point F est disposé sur le bord libre à 95% de la hauteur de veine aérodynamique.

Le troisième point G et le quatrième point F définissent le deuxième vecteur.

La direction de chaine C et le deuxième vecteur forment un deuxième angle β qui est supérieur ou égal à 15°.

Comme représenté sur les figures 4 et 6, on constate que la portion 20A du bouclier 20 qui peut se décoller du corps d'aube 18 est réduite dans le cas de la figure 6 en comparaison à la figure 4. De ce fait, lors d'un décollement partiel de l'ailette extrados, la dégradation de l'aérodynamisme de l'aube 16 est réduite par rapport à une aube de l'état de la technique.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Aube (16) comprenant un corps d'aube (18) en matériau composite à matrice organique renforcée par des fibres et un bouclier (20) de bord d'attaque en un matériau ayant une meilleure résistance aux impacts ponctuels que le matériau composite du corps d'aube, le bouclier (20) de bord d'attaque étant assemblé sur le corps d'aube (18) et comportant une ailette intrados (32) et une ailette extrados (30) reliées par une partie centrale (34) plus épaisse, l'aube (16) comportant une hauteur de veine aérodynamique et une longueur de corde, l'aube étant **caractérisée en ce que** l'ailette extrados (30) du bouclier (20) présente:
- une première longueur (36) projetée sur la corde comprise entre 10 et 18% de la longueur de corde, la première longueur (36) étant disposée entre 70 et 80% de la hauteur de veine aérodynamique,
- une deuxième longueur (38) projetée sur la corde comprise entre 18 et 26% de la longueur de corde, la deuxième longueur (38) étant disposée entre 85 et 95% de la hauteur de veine aérodynamique, et
- une troisième longueur (40) projetée sur la corde comprise entre la première longueur (36) et la deuxième longueur (38), la troisième longueur (40) étant disposée à 100% de la hauteur de veine aérodynamique.

2. Aube (16) selon la revendication 1, dans laquelle la première longueur (36) est égale à 14% de la longueur de corde.

3. Aube (16) selon la revendication 1 ou 2, dans laquelle la deuxième longueur (38) est égale à 22% de la longueur de corde.

4. Aube (16) selon l'une quelconque des revendications 1 à 3, dans laquelle la première longueur (36) est disposée à 75% de la hauteur de veine aérodynamique.

5. Aube (16) selon l'une quelconque des revendications 1 à 4, dans laquelle la deuxième longueur (38) est disposée à 90% de la hauteur de veine aérodynamique.

6. Aube (16) selon l'une quelconque des revendications 1 à 5, dans laquelle le corps d'aube (18) comprend une direction de chaine (C) et une direction de trame (T) et l'ailette extrados (30) comprend un bord libre (42), un premier point (D) disposé sur le bord libre (42) à la même hauteur que la première longueur (36) et un deuxième point (E) disposé sur le bord libre (42) à une hauteur supérieure ou égale à 5% de la hauteur de veine aérodynamique par rapport à la hauteur de la première longueur (36) et inférieure ou égale à 85% de la hauteur de veine aérodynamique définissent un premier vecteur, le premier vecteur et la direction de chaîne (C) au premier point (D) définissant un premier angle (α), le premier angle (α) étant supérieur ou égal à 15°.

7. Aube selon l'une quelconque des revendications 1 à 5, dans laquelle le corps d'aube (18) comprend une direction de chaine (C) et une direction de trame (T) et l'ailette extrados (30) comprend un bord libre (42), un troisième point (G) disposé sur le bord libre (42) à 100% de la hauteur de veine aérodynamique et un quatrième point (F) disposé sur le bord libre (42) à une hauteur supérieure à la hauteur de la deuxième longueur (38) et inférieure ou égale à 95% de la hauteur de veine aérodynamique définissent un deuxième vecteur, le deuxième vecteur et la direction de chaîne (C) au troisième point (G) définissant un deuxième angle (β), le deuxième angle (β) étant supérieur ou égal à 15°.

8. Aube selon l'une quelconque des revendications 1 à 5, dans laquelle le corps d'aube (18) comprend une direction de chaine (C) et une direction de trame (T) et l'ailette extrados (30) comprend un bord libre (42), un premier point (D) disposé sur le bord libre (42) à la même hauteur que la première longueur (36) et un deuxième point (E) disposé sur le bord libre (42) à une hauteur supérieure ou égale à 5% de la hauteur de veine aérodynamique par rapport à la hauteur de la première longueur (36) et inférieure ou égale à 85% de la hauteur de veine aérodynamique définissent un premier vecteur, le premier vecteur et la direction de chaîne (C) au premier point (D) définissant un premier angle (α), le premier angle (α) étant supérieur ou égal à 15° et un troisième point (G) disposé sur le bord libre (42) à 100% de la hauteur de veine aérodynamique et un quatrième point (F) disposé sur le bord libre (42) à une hauteur supérieure à la hauteur de la deuxième longueur (38) et inférieure ou égale à 95% de la hauteur de veine aérodynamique définissent un deuxième vecteur, le deuxième vecteur et la direction de chaîne (C) au troisième point (G) définissant un deuxième angle (β), le deuxième angle (β) étant supérieur ou égal à 15°.

9. Turbomachine comprenant une aube selon l'une quelconque des revendications 1 à 8.

## Patentansprüche

1. Schaufel (16), umfassend einen Schaufelkörper (18) aus Verbundmaterial mit organischer Matrix, die mit Fasern verstärkt ist, und ein Vorderkanten-Schild (20) aus einem Material, das einen besseren Widerstand gegen punktuelle Stöße aufweist als das Verbundmaterial des Schaufelkörpers, wobei das Vorderkanten-Schild (20) an dem Schaufelkörper (18) montiert ist und einen druckseitigen Flügel (32) und einen saugseitigen Flügel (30) umfasst, die durch einen dickeren zentralen Teil (34) verbunden sind, und die Schaufel (16) eine Höhe des aerodynamischen Strömungsgangs und eine Sehnenlänge beinhaltet, wobei die Schaufel **dadurch gekennzeichnet ist, dass** der saugseitige Flügel (30) des Schildes (20) aufweist:
- eine erste Länge (36), die auf die Sehne projiziert zwischen 10 und 18 % der Sehnenlänge beträgt, wobei die erste Länge (36) auf zwischen 70 und 80 % der Höhe des aerodynamischen Strömungsgangs angeordnet ist,
- eine zweite Länge (38), die auf die Sehne projiziert zwischen 18 und 26 % der Sehnenlänge beträgt, wobei die zweite Länge (38) auf zwischen 85 und 95 % der Höhe des aerodynamischen Strömungsgangs angeordnet ist, und
- eine dritte Länge (40), die auf die Sehne projiziert zwischen der ersten Länge (36) und der zweiten Länge (38) liegt, wobei die dritte Länge (40) auf 100 % der Höhe des aerodynamischen Strömungsgangs angeordnet ist.

2. Schaufel (16) nach Anspruch 1, wobei die erste Länge (36) gleich 14 % der Sehnenlänge beträgt.

3. Schaufel (16) nach Anspruch 1 oder 2, wobei die zweite Länge (38) gleich 22 % der Sehnenlänge beträgt.

4. Schaufel (16) nach einem der Ansprüche 1 bis 3, wobei die erste Länge (36) auf 75 % der Höhe des aerodynamischen Strömungsgangs angeordnet ist.

5. Schaufel (16) nach einem der Ansprüche 1 bis 4, wobei die zweite Länge (38) auf 90 % der Höhe des aerodynamischen Strömungsgangs angeordnet ist.

6. Schaufel (16) nach einem der Ansprüche 1 bis 5, wobei der Schaufelkörper (18) eine Kettrichtung (C) und eine Schussrichtung (T) umfasst und der saugseitige Flügel (30) einen freien Rand (42) umfasst, ein erster Punkt (D), der auf dem freien Rand (42) auf derselben Höhe wie die erste Länge (36) angeordnet ist, und ein zweiter Punkt (E), der auf dem freien Rand (42) auf einer Höhe angeordnet ist, die größer oder gleich 5 % der Höhe des aerodynamischen Strömungsgangs in Bezug auf die Höhe der ersten Länge (36) und kleiner oder gleich 85 % der Höhe des aerodynamischen Strömungsgangs ist, einen ersten Vektor definieren, wobei der erste Vektor und die Kettrichtung (C) an dem ersten Punkt (D) einen ersten Winkel (α) definieren, wobei der erste Winkel (α) größer oder gleich 15° ist.

7. Schaufel nach einem der Ansprüche 1 bis 5, wobei der Schaufelkörper (18) eine Kettrichtung (C) und eine Schussrichtung (T) umfasst und der saugseitige Flügel (30) einen freien Rand (42) umfasst, ein dritter Punkt (G), der auf dem freien Rand (42) auf 100 % der Höhe des aerodynamischen Strömungsgangs angeordnet ist, und ein vierter Punkt (F), der auf dem freien Rand (42) auf einer Höhe angeordnet ist, die größer ist als die Höhe der zweiten Länge (38) und kleiner oder gleich 95 % der Höhe des aerodynamischen Strömungsgangs ist, einen zweiten Vektor definieren, wobei der zweite Vektor und die Kettrichtung (C) an dem dritten Punkt (G) einen zweiten Winkel (β) definieren, wobei der zweite Winkel (β) größer oder gleich 15° ist.

8. Schaufel nach einem der Ansprüche 1 bis 5, wobei der Schaufelkörper (18) eine Kettrichtung (C) und eine Schussrichtung (T) umfasst und der saugseitige Flügel (30) einen freien Rand (42) umfasst, ein erster Punkt (D), der auf dem freien Rand (42) auf derselben Höhe wie die erste Länge (36) angeordnet ist, und ein zweiter Punkt (E), der auf dem freien Rand (42) auf einer Höhe angeordnet ist, die größer oder gleich 5 % der Höhe des aerodynamischen Strömungsgangs in Bezug auf die Höhe der ersten Länge (36) und kleiner oder gleich 85 % der Höhe des aerodynamischen Strömungsgangs ist, einen ersten Vektor definieren, wobei der erste Vektor und die Kettrichtung (C) an dem ersten Punkt (D) einen ersten Winkel (α) definieren, wobei der erste Winkel (α) größer oder gleich 15° ist, und ein dritter Punkt (G), der auf dem freien Rand (42) auf 100 % der Höhe des aerodynamischen Strömungsgangs angeordnet ist, und ein vierter Punkt (F), der auf dem freien Rand (42) auf einer Höhe angeordnet ist, die größer als die Höhe der zweiten Länge (38) und kleiner oder gleich 95 % der Höhe des aerodynamischen Strömungsgangs ist, einen zweiten Vektor definieren, wobei der zweite Vektor und die Kettrichtung (C) an dem dritten Punkt (G) einen zweiten Winkel (β) definieren, wobei der zweite Winkel (β) größer oder gleich 15° ist.

9. Turbomaschine, umfassend eine Schaufel nach einem der Ansprüche 1 bis 8.

## Claims

1. A blade (16) comprising a blade body (18) made of fiber-reinforced organic-matrix composite material and a leading edge shield (20) made of a material having a better resistance to point impacts than the composite material of the blade body, the leading edge shield (20) being assembled on the blade body (18) and including a pressure side fin (32) and a suction side fin (30) connected by a thicker central part (34), the blade (16) including an aerodynamic airfoil height and a chord length, the blade being **characterized in that** the suction side fin (30) of the shield (20) has:
- a first length (36) projected onto the chord between 10 and 18% of the chord length, the first length (36) being disposed between 70 and 80% of the aerodynamic airfoil height,
- a second length (38) projected onto the chord between 18 and 26% of the chord length, the second length (38) being disposed between 85 and 95% of the aerodynamic airfoil height, and
- a third length (40) projected onto the chord between the first length (36) and the second length (38), the third length (40) being disposed at 100% of the aerodynamic airfoil height.

2. The blade (16) according to claim 1, wherein the first length (36) is equal to 14% of the chord length.

3. The blade (16) according to claim 1 or 2, wherein the second length (38) is equal to 22% of the chord length.

4. The blade (16) according to any of claims 1 to 3, wherein the first length (36) is disposed at 75% of the aerodynamic airfoil height.

5. The blade (16) according to any of claims 1 to 4, wherein the second length (38) is disposed at 90% of the aerodynamic airfoil height.

6. The blade (16) according to any of claims 1 to 5, wherein the blade body (18) comprises a warp direction (C) and a weft direction (T) and the suction side fin (30) comprises a free edge (42), a first point (D) disposed on the free edge (42) at the same height as the first length (36) and a second point (E) disposed on the free edge (42) at a height greater than or equal to 5% of the aerodynamic airfoil height with respect to the height of the first length (36) and less than or equal to 85% of the aerodynamic airfoil height define a first vector, the first vector and the warp direction (C) at the first point (D) defining a first angle (α), the first angle (α) being greater than or equal to 15°.

7. The blade (16) according to any of claims 1 to 5, wherein the blade body (18) comprises a warp direction (C) and a weft direction (T) and the suction side fin (30) comprises a free edge (42), a third point (G) disposed on the free edge (42) at 100% of the aerodynamic airfoil height and a fourth point (F) disposed on the free edge (42) at a height greater than the height of the second length (38) and less than or equal to 95% of the aerodynamic airfoil height define a second vector, the second vector and the warp direction (C) at the third point (G) defining a second angle (β), the second angle (β) being greater than or equal to 15°.

8. The blade (16) according to any of claims 1 to 5, wherein the blade body (18) comprises a warp direction (C) and a weft direction (T) and the suction side fin (30) comprises a free edge (42), a first point (D) disposed on the free edge (42) at the same height as the first length (36) and a second point (E) disposed on the free edge (42) at a height greater than or equal to 5% of the aerodynamic airfoil height with respect to the height of the first length (36) and less than or equal to 85% of the aerodynamic airfoil height define a first vector, the first vector and the warp direction (C) at the first point (D) defining a first angle (α), the first angle (α) being greater than or equal to 15° and a third point (G) disposed on the free edge (42) at 100% of the aerodynamic airfoil height and a fourth point (F) disposed on the free edge (42) at a height greater than the height of the second length (38) and less than or equal to 95% of the aerodynamic airfoil height define a second vector, the second vector and the warp direction (C) at the third point (G) defining a second angle (β), the second angle (β) being greater than or equal to 15°.

9. A turbomachine comprising a blade according to any of claims 1 to 8.
